(19) **Europäisches Patentamt / European Patent Office / Office européen des brevets**

(11) **EP 3 354 700 B1**

(12) # EUROPEAN PATENT SPECIFICATION

(45) Date of publication and mention of the grant of the patent:
**20.07.2022  Bulletin 2022/29**

(21) Application number: **16848687.6**

(22) Date of filing: **23.09.2016**

(51) International Patent Classification (IPC):
**C09D 201/02** (2006.01)   **C09C 3/08** (2006.01)
**C09C 3/10** (2006.01)   **C09D 5/02** (2006.01)
**C09D 5/44** (2006.01)   **C09D 7/40** (2018.01)
**C09D 175/04** (2006.01)

(52) Cooperative Patent Classification (CPC):
**C09C 3/08; C09C 3/10; C09D 5/02; C09D 5/44; C09D 7/40; C09D 175/04; C09D 201/02**

(86) International application number:
**PCT/JP2016/078111**

(87) International publication number:
**WO 2017/051899 (30.03.2017 Gazette 2017/13)**

(54) **METHOD FOR PREPARING CATIONIC ELECTRODEPOSITION COATING MATERIAL COMPOSITION**

VERFAHREN ZUR HERSTELLUNG EINER KATIONISCHEN ELEKTROTAUCHLACKIERUNGSMATERIALZUSAMMENSETZUNG

PROCÉDÉ DE PRÉPARATION D'UNE COMPOSITION DE MATÉRIAU DE REVÊTEMENT PAR ÉLECTRODÉPOSITION CATIONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2015  JP 2015188729**

(43) Date of publication of application:
**01.08.2018  Bulletin 2018/31**

(73) Proprietor: **Nippon Paint Automotive Coatings Co., Ltd.**
**Osaka 573-1153 (JP)**

(72) Inventors:
• **TAGO, Yohei**
  **Hirakata-shi**
  **Osaka 573-1153 (JP)**
• **KOTANI, Masayuki**
  **Hirakata-shi**
  **Osaka 573-1153 (JP)**
• **MIYAMAE, Nobuhiro**
  **Hirakata-shi**
  **Osaka 573-1153 (JP)**

(74) Representative: **Mewburn Ellis LLP**
**Aurora Building**
**Counterslip**
**Bristol BS1 6BX (GB)**

(56) References cited:
**WO-A1-99/31187**     **WO-A1-2013/035765**
**WO-A1-2016/143706**  **JP-A- 2000 355 673**
**JP-A- 2007 284 603**  **JP-A- 2013 056 961**
**US-B1- 6 333 367**

• **DATABASE WPI Week 201663 Thomson Scientific, London, GB; AN 2016-56506T XP002790989, -& JP 2016 164219 A (NIPPON PAINT AUTOMOTIVE COATINGS CO LTD) 8 September 2016 (2016-09-08) & EP 3 266 842 A1 (NIPPON PAINT AUTOMOTIVE COATINGS CO LTD [JP]) 10 January 2018 (2018-01-10)**
• **DATABASE WPI Week 201666 Thomson Scientific, London, GB; AN 2016-57851A XP002790990, -& WO 2016/143707 A1 (NIPPON PAINT AUTOMOTIVE COATINGS CO LTD) 15 September 2016 (2016-09-15)**

- DATABASE WPI Week 201324 Thomson Scientific, London, GB; AN 2013-E24534 XP002790991, -& JP 2013 056961 A (NIPPON PAINT AUTOMOTIVE COATINGS CO LTD) 28 March 2013 (2013-03-28)

**Description**

Field of the Invention

The present invention relates to a method for preparing a cationic electrodeposition coating composition.

Background of the Invention

A cationic electrodeposition coating composition generally contains a resin emulsion and a pigment dispersion paste. In such a cationic electrodeposition coating composition, an organotin compound has been widely used as a curing catalyst. However, use of an organotin compound may be restricted in the future in view of recent trends of environmental regulations. Therefore, it is necessary to develop an alternative catalyst that replaces an organotin compound.

Studies have been conducted on use of a bismuth compound as a curing catalyst for a cationic electrodeposition coating composition. However, for example, mere dispersion of a bismuth compound such as bismuth oxide or bismuth hydroxide in a pigment dispersion paste reduces the catalytic activity of the bismuth compound, so that it is not possible to sufficiently cure a coating film. In addition, there is the problem that addition of the bismuth compound to the cationic electrodeposition coating composition deteriorates storage stability of the coating composition or the pigment dispersion paste, resulting in aggregation during storage.

A method is disclosed in which a bismuth compound is mixed and dissolved with an amine-containing carboxylic acid such as an amino acid in advance, and the resulting mixture is used for preparation of a pigment dispersion paste (Patent Document 1). In addition, a method is disclosed in which a bismuth compound is mixed and dissolved with lactic acid in advance, and the resulting mixture is added to a coating material(Patent Document 2). As described in these documents, there is an advantage that catalytic activity is improved by dissolving bismuth in advance. On the other hand, in order todissolve bismuth in advance, it is necessary to use a large amount of acid. There is a disadvantage that by using a large amount of acid to dissolve bismuth, the electric conductivity of the electrodeposition coating composition is increased, leading to deterioration of electrodeposition coating workability, and appearance of the resulting coating film is deteriorated.

Patent Document 3 discloses a method for preparing a cationic electrodeposition coating composition, which comprises a step for mixing a resin emulsion (i) and a pigment-dispersed paste, and wherein: the resin emulsion (i) contains an aminated resin (A) and a blocked isocyanate curing agent (B); the pigment-dispersed paste contains a bismuth mixture (C) that is obtained by mixing a bismuth compound (c1) and an organic acid (c2) in advance, a pigment-dispersed resin (D), an amine-modified epoxy resin emulsion (ii) that contains an amine-modified epoxy resin (E), and a pigment (F); the pigment-dispersed resin (D) has a hydroxyl number of 20-120 mgKOH/g; and the amine-modified epoxy resin (E) has a hydroxyl number of 150-650 mgKOH/g.

Patent Document 4 discloses a cationic electrodeposition coating composition containing (A) an acrylic resin obtained by subjecting a mixture of 10 to 60% by weight of a hydroxyl group-containing acrylic monomer (a), 5 to 35% by weight of an amino group-containing acrylic monomer (b), 5 to 55% by weight of an aromatic vinyl monomer (c) and optionally another acrylic monomer (d) to a radical copolymerization reaction; (B) a hydroxyl group-containing acrylic resin-modified epoxy resin obtained by reacting 65 to 95% by weight of a resin composition consisting of 10 to 90% by weight of an epoxy resin (e) and 90 to 10% by weight of a hydroxyl group-containing acrylic resin (f) with 5 to 35% by weight of an amine compound (g); (C) a aliphatic and/or alicyclic blocked polyisocyanate compound, and (D) a bismuth compound component, a mixing ratio of the components (A), (B) and (C) being such that the component (A) is in the range of 40 to 90% by weight, the component (B) is in the range of 5 to 55% by weight and the component (C) is in the range of 5 to 40% by weight based on a total weight of solid contents in the components (A), (B) and (C), the component (D) being contained in such an amount as to be in the range of 0.01 to 10 parts by weight as a bismuth content per 100 parts by weight of a resin solid content in the electrodeposition coating composition

Patent Document 5 discloses an electrodeposition paint composition includes a zirconium compound (A), an aminated resin (B), a hardener (C) and an organic acid (D). The organic acid (D) is at least one selected from the group consisting of alkane sulfonic acid, organic phosphonic acid, organic carboxylic acid, amino acid, aminocarboxylic acid, saccharic acid, and carboxyl-containing vinyl resin. The milliequivalent (MEQ(A)) of acid to resin solid content 100 g in the electrodeposition paint composition is 20-200, and pH of the electrodeposition paint composition is 2-6.

Description of the related art

Patent Documents

Patent Document 1: Japanese Patent No. 3293633
Patent Document 2: Japanese Patent No. 3874386
Patent Document 3: EP3266842
Patent Document 4: US6333367B1
Patent Document 5: JP2013056961

Summary of the Invention

Technical Problems

The present invention solves the above-described problems of conventional techniques, and an object of the present invention is to provide a method for preparing a cationic electrodeposition coating composition which contains a bismuth compound and is excellent in coating material stability, curability, coating film appearance and the like.

Means for Solving Problems

For solving the above-described problems, the present invention provides the following aspects.

[1] A method for preparing a cationic electrodeposition coating composition,as set out according to the claims.

Effect of the Invention

According to the preparation method of the present invention, a cationic electrodeposition coating composition can be prepared which contains a bismuth compound and is capable of forming a cured electrodeposition coating film having excellent coating material stability and curability, and an excellent coating film appearance. The method of the present invention also has an advantage that since it is not necessary to prepare an aqueous solution of a bismuth compound having a low solubility in an aqueous medium, the electrodeposition coating composition can be more easily and conveniently prepared. According to the preparation method of the present invention, a cationic electrodeposition coating composition can be easily prepared which is capable of forming a cured electrodeposition coating film having excellent curability and coating material stability, and an excellent coating film appearance even when an organotin compound is not substantially contained.

Detailed description of the invention

Explanation of background of the invention

First, circumstances leading to the present invention will be described. The present inventors have conducted studies on dispersion of bismuth in a pigment dispersion paste for the purpose of stably dispersing a bismuth component in an electrodeposition coating composition. In this study, it has been found that by mixing a bismuth compound with an acid compound in advance, and adding the mixture, bismuth is brought into a finely divided state, so that catalytic activity is improved, leading to improvement of curability. On the other hand, it has been found that when the bismuth compound is mixed with the acid component in advance, and added in the pigment dispersion paste, there arises the problem that aggregates can be generated in the pigment dispersion paste. This may be because the pigment dispersion paste containing a pigment at a high concentration contains finely divided bismuth, and thus aggregation of the pigment occurs, so that aggregates are generated. Generation of aggregates causes the problem that color unevenness or the like occurs in the electrodeposition coating film, leading to deterioration of the coating film appearance.
The present inventors have aimed to develop a method which ensures that the catalytic activity of a bismuth compound is improved, and aggregation of a pigment, or the like does not occur even when the bismuth compound is added in a pigment paste. The present inventors have found through experiments that by using a polyvalent acid in addition to a pigment dispersion resin and specifying the order of mixing components in preparation of a pigment dispersion paste containing a bismuth compound, the stability of the pigment dispersion paste and an electrodeposition coating composition is improved even if containing finely divided bismuth, leading to completion of the present invention. Hereinafter, the preparation method of the present invention will be described in detail.

Method for preparing cationic electrodeposition coating composition

The method for preparing a cationic electrodeposition coating composition according to the present invention includes mixing a resin emulsion (i) and a pigment dispersion paste (ii). The resin emulsion (i) contains an aminated resin (A) and a blocked isocyanate curing agent (B). The pigment dispersion paste (ii) contains a bismuth mixture liquid (C) containing a bismuth compound (c1), an organic acid (c2) and a solvent; a pigment dispersion resin (D); a polyvalent acid (E); and a pigment (F), and the pigment dispersion paste (ii) is prepared by:

mixing the bismuth compound (c1), the organic acid (c2) and the solvent to prepare the bismuth mixture liquid (C); mixing the resulting bismuth mixture liquid (C), the pigment dispersion resin (D) and the polyvalent acid (E) to prepare a bismuth dispersion liquid, and then mixing the resulting bismuth dispersion liquid and the pigment (F) to prepare the pigment dispersion paste (ii).

Hereinafter, each component and the like will be described in detail.

Resin emulsion (i)

The resin emulsion (i) contains an aminated resin (A) and a blocked isocyanate curing agent (B). The resin emulsion (i) may further contain other components if necessary.

Aminated resin (A)

The aminated resin (A) is a coating film-forming resin that forms an electrodeposition coating film. The aminated resin (A) is preferably an amine-modified epoxy resin obtained by modifying an oxirane ring in an epoxy resin skeleton with an amine compound. Generally, an amine-modified epoxy resin is prepared by opening an oxirane ring in a starting material resin molecule by reaction with an amine compound such as a primary amine, a secondary amine or a tertiary amine and/or an acid salt thereof. Typical examples of the starting material resin include polyphenol polyglycidyl ether-type epoxy resins which are reaction products of a polycyclic phenol compound such as bisphenol A, bisphenol F, bisphenol S, phenol novolac or cresol novolak, with epichlorohydrin. Other examples of the starting material resin may include oxazolidone ring-containing epoxy resins as described in Japanese Patent Application Publication No. H5(1993)-306327. These epoxy resins can be prepared by reacting epichlorohydrin with diisocyanate compound, or a bisurethane compound obtained by blocking an isocyanate group of a diisocyanate compound with a lower alcohol such as methanol or ethanol.

Before the ring-opening reaction of the oxirane ring with the amine compound, the starting material resin can be chain-extended with a difunctional polyester polyol, polyether polyol, bisphenol, dibasic carboxylic acid or the like.

In addition, before the ring-opening reaction of the oxirane ring with the amine compound, a monohydroxy compound such as 2-ethylhexanol, nonylphenol, ethylene glycol mono-2-ethylhexyl ether, ethylene glycol mono-n-butyl ether or propylene glycol mono-2-ethylhexyl ether, or a monocarboxylic acid compound such as octylic acid can be added for the purpose of, for example, controlling the molecular weight or the amine equivalent, and improving thermal flow property.

By reacting the oxirane ring of the epoxy resin with the amine compound, an amine-modified epoxy resin can be obtained. Examples of the amine compound to be reacted with the oxirane ring include primary amines and secondary amines. When the epoxy resin is reacted with a secondary amine, an amine-modified epoxy resin having a tertiary amino group can be obtained. In addition, when the epoxy resin is reacted with a primary amine, an amine-modified epoxy resin having a secondary amino group can be obtained. Further, by using a secondary amine having a blocked primary amine, an amine-modified epoxy resin having a primary amino group can be prepared. For example, preparation of an amine-modified epoxy resin having a primary amino group and a secondary amino group can be performed in the following manner: the primary amino group is blocked with a ketone to form a ketimine before being reacted with the epoxy resin, the ketimine is introduced into the epoxy resin, and then deblocked. As an amine to be reacted with the oxirane ring, a tertiary amine may be used in combination as necessary.

Specific examples of the primary amine and secondary amine include butylamine, octylamine, diethylamine, dibutylamine, methylbutylamine, monoethanolamine, diethanolamine and N-methylethanolamine. Specific examples of the secondary amine having a blocked primary amine include ketimines of aminoethylethanolamine, and diketimines of diethylenetriamine. Specific examples of the tertiary amine which may be used as necessary include triethylamine, N,N-dimethylbenzylamine and N,N-dimethylethanolamine. Only one of these amines may be used alone, or two or more of these amines may be used in combination.

The amine compound to be reacted with the oxirane ring of the epoxy resin may preferably be one containing 50 to 95% by mass of the secondary amine, 0 to 30% by mass of the secondary amine having a blocked primary amine, and 0 to 20% by mass of the primary amine.

A number average molecular weight of the aminated resin (A) may preferably be in a range of 1,000 to 5,000. When the number average molecular weight is 1,000 or more, physical properties, such as solvent resistance and corrosion resistance, of the resulting cured electrodeposition coating film are improved. On the other hand, when the number average molecular weight is 5,000 or less, it is easy to adjust the viscosity of the aminated resin, so that smooth synthesis is possible, and it is easy to handle emulsification and dispersion of the resulting aminated resin (A). The number average molecular weight of the aminated resin (A) may more preferably be in a range of 2,000 to 3,500.

In this specification, the number average molecular weight is a number average molecular weight in terms of polystyrene as measured by gel permeation chromatography (GPC).

An amine value of the aminated resin (A) may preferably be in a range of 20 to 100 mg KOH/g. When the amine value of the aminated resin (A) is 20 mg KOH/g or more, stability of emulsification and dispersion of the aminated resin (A) in the electrodeposition coating composition is improved. On the other hand, when the amine value is 100 mg KOH/g or less, an amount of amino groups in the cured electrodeposition coating film is appropriate, so that a risk of deteriorating water resistance of the coating film is eliminated. The amine value of the aminated resin (A) may more preferably be in a range of 20 to 80 mg KOH/g.

A hydroxyl value of the aminated resin (A) may preferably be in a range of 150 to 650 mg KOH/g. When the hydroxyl value is 150 mg KOH/g or more, curing is improved in the cured electrodeposition coating film, and appearance of the coating film is also improved. On the other hand, when the hydroxyl value is 650 mg KOH/g or less, an amount of hydroxyl groups remaining in the cured electrodeposition coating film is appropriate, so that the risk of deteriorating the water resistance of the coating film is eliminated. The hydroxyl value of the aminated resin (A) may more preferably be in a range of 180 to 300 mg KOH/g.

Use of an aminated resin having a number average molecular weight of 1,000 to 5,000, an amine value of 20 to 100 mg KOH/g and a hydroxyl value of 150 to 650 mg KOH/g as the aminated resin (A) has an advantage that excellent corrosion resistance can be imparted to an object to be coated.

As the aminated resin (A), aminated resins having different amine values and/or hydroxyl values may be used in combination as necessary. When two or more aminated resins having different amine values and hydroxyl values are used in combination, the average amine value and the average hydroxyl value calculated on basis of the mass ratio of the aminated resin to be used may preferably be in the above-described numerical value range. When the aminated resin (A) is a combination of aminated resins, it may preferable be that an aminated resin having an amine value of 20 to 50 mg KOH/g and a hydroxyl value of 50 to 300 mg KOH/g, and an aminated resin having an amine value of 50 to 200 mg KOH/g and a hydroxyl value of 200 to 500 mg KOH/g are used in combination. Use of such a combination has an advantage that the emulsion has a more hydrophobic core portion and more hydrophilic shell portion, and therefore excellent corrosion resistance can be imparted.

The aminated resin (A) may contain an amino group-containing acrylic resin, an amino group-containing polyester resin or the like as necessary.


Blocked isocyanate curing agent (B)

The blocked isocyanate curing agent (B) (hereinafter, sometimes referred to simply as a "curing agent (B)") is a coating film-forming resin that forms an electrodeposition coating film. The blocked isocyanate curing agent (B) can be prepared by blocking a polyisocyanate with an encapsulant.

Examples of the polyisocyanate include aliphatic diisocyanates such as hexamethylene diisocyanate (including a trimer), tetramethylene diisocyanate and trimethylhexamethylene diisocyanate; cycloaliphatic polyisocianates such as isophorone diisocyanate and 4,4'-methylene-bis-(cyclohexyl isocyanate); and aromatic diisocyanates such as 4,4'-diphenylmethane diisocyanate, tolylene diisocyanate and xylylene diisocyanate.

Examples of the encapsulant that may preferably be used include monovalent alkyl (or aromatic) alcohols such as n-butanol, n-hexyl alcohol, 2-ethylhexanol, lauryl alcohol, phenol carbinol and methylphenyl carbinol; cellosolves such as ethylene glycol monohexyl ether and ethylene glycol mono-2-ethylhexyl ether; diols with polyether-type both-ended diols such as polyethylene glycol, polypropylene glycol and polytetramethylene ether glycol phenol; polyester-type both-ended polyols obtained from a diol such as ethylene glycol, propylene glycol or 1,4-butanediol and a dicarboxylic acid such as oxalic acid, succinic acid, adipic acid, suberic acid or sebacic acid; phenols such as para-t-butylphenol and cresol; oximes such as dimethyl ketoxime, methyl ethyl ketoxime, methyl isobutyl ketoxime, methyl amyl ketoxime and cyclohexanone oxime; and lactams typified by ε-caprolactam and γ-butyrolactam.

The blocking ratio of the blocked isocyanate curing agent (B) may preferably be 100%. Accordingly, there is an advantage that the storage stability of the electrodeposition coating composition is improved.

It is preferable that as the blocked isocyanate curing agent (B), a curing agent prepared by blocking an aliphatic diisocyanate with an encapsulant and a curing agent prepared by blocking an aromatic diisocyanate with an encapsulant may preferably be used in combination.

The blocked isocyanate curing agent (B) preferentially reacts with the primary amine of the aminated resin (A), and further reacts with a hydroxyl group to be cured. As the curing agent, at least one curing agent selected from the group consisting of an organic curing agent such as a melamine resin or a phenol resin, a silane coupling agent and a metal curing agent may be used in combination with the blocked isocyanate curing agent (B).

Preparation of resin emulsion (i)

The resin emulsion (i) is prepared by dissolving each of the aminated resin (A) and the blocked isocyanate curing agent (B) in an organic solvent to prepare a solution, mixing the solutions, and then neutralizing the mixture using a neutralizing acid. Examples of the neutralizing acid include organic acids such as methanesulfonic acid, sulfamic acid, lactic acid, dimethylolpropionic acid, formic acid and acetic acid. In the present invention, it may be more preferable to neutralize the resin emulsion containing the aminated resin (A) and the curing agent (B) with at least one acid selected from the group consisting of formic acid, acetic acid and lactic acid.

Content of the curing agent (B) is required to be sufficient for reacting with an active hydrogen-containing functional group such as a primary amino group, a secondary amino group or a hydroxyl group in the aminated resin (A) during curing to give a favorable cured coating film. The content of the curing agent (B), in terms of a solid content mass ratio of the aminated resin (A) and the curing agent (B) (aminated resin (A)/curing agent (B)) may preferably be in a range of 90/10 to 50/50, more preferably 80/20 to 65/35. Adjustment of the solid content mass ratio of the aminated resin (A) and the curing agent (B) improves the flowability and the curing rate of the coating film (deposition film) during film formation, and improves the coating appearance.

Generally, a solid content of the resin emulsion (i) may preferably be 25 to 50% by mass, particularly preferably from 35 to 45% by mass, based on the total amount of the resin emulsion (i). Here, the "solid content of a resin emulsion" means the mass of all components which are contained in the resin emulsion and which remain as a solid even when a solvent is removed. Specifically, the "solid content of a resin emulsion" means the total mass of the aminated resin (A) and the curing agent (B) contained in the resin emulsion (i) and other solid components added to the resin emulsion (i) as necessary.

The neutralizing acid is used in an amount of more preferably 10 to 100%, still more preferably 20 to 70%, in terms of a ratio of the equivalent of the neutralizing acid to the equivalent of amino groups of the aminated resin (A). In this specification, the ratio of the equivalent of the neutralizing acid to the equivalent of amino groups of the aminated resin (A) is defined as a neutralization ratio. When the neutralization ratio is 10% or more, affinity for water is secured, so that water dispersibility is improved.

Pigment dispersion paste (ii)

The pigment dispersion paste (ii) used in the method of the present invention contains a bismuth mixture liquid (C) containing a bismuth compound (c1), an organic acid (c2) and a solvent; a pigment dispersion resin (D); a polyvalent acid (E); and a pigment (F). The pigment dispersion paste (ii) is prepared by:

mixing the bismuth compound (c1), the organic acid (c2) and the solvent to prepare the bismuth mixture liquid (C); mixing the resulting bismuth mixture liquid (C), the pigment dispersion resin (D) and the polyvalent acid (E) to prepare a bismuth dispersion liquid, and mixing the resulting bismuth dispersion liquid and the pigment (F) to prepare the pigment dispersion paste (ii).

Bismuth mixture liquid (C)

The bismuth mixture liquid (C) is a mixed solution prepared by mixing the bismuth compound (c1), the organic acid (c2) and the solvent in advance in preparation of the pigment dispersion paste (ii). In preparation of the pigment dispersion paste (ii), the bismuth compound (c1), the organic acid (c2) and the solvent are mixed in advance to disperse the bismuth compound in a finely divided state, so that favorable catalytic activity can be obtained.

Bismuth compound (c1)

The bismuth compound (c1) is a compound containing a bismuth metal, and examples thereof include bismuth oxide, bismuth hydroxide, bismuth nitrate and mixtures thereof. The bismuth compound (c1) may preferably be at least one selected from the group consisting of bismuth oxide and bismuth hydroxide.

As the bismuth compound (c1), one in the form of a powder is used. An average particle size of the bismuth compound (c1) may preferably be 0.5 to 20 $\mu$m, more preferably 1 to 3 $\mu$m. In this specification, the average particle size refers to a volume average particle diameter D50, which is a value measured with a dispersion diluted with ion-exchanged water so as to attain an appropriate signal level using a laser Doppler type particle size analyzer ("Microtrac UPA 150" manufactured by Nikkiso Co., Ltd.).

An amount of the bismuth compound (c1) contained in the electrodeposition coating composition according to the present invention may preferably be 0.05 to 1.0% by mass in terms of a metal element based on the resin solid content of the resin emulsion (i) contained in the electrodeposition coating composition. When the amount of the bismuth compound (c1) is in the above-described range, the resin component of the resin emulsion (i) can be favorably cured, and storage stability of the electrodeposition coating composition can be kept favorable.

The "resin solid content of the resin emulsion (i)" means the total mass of solid components of resin components contained in the resin emulsion (i), i.e. the aminated resin (A) and the curing agent (B).

In this specification, the term "in terms of a metal element" means that a target metal element amount is determined by multiplying the content of a metal compound by a metal element conversion coefficient (a coefficient for converting a metal compound amount into a metal element amount, which specifically means a value obtained by dividing the atomic weight in a metal compound by the molecular weight of the metal compound). For example, when the bismuth compound (c1) is bismuth oxide ($Bi_2O_3$, molecular weight: 466), the content of bismuth in terms of a metal element in an electrodeposition coating composition containing 0.5% by mass based on the resin solid content of the resin emulsion (i) is determined as 0.448% by mass by calculating the formula: 0.5% by mass $\times$ (418 $\div$ 466).

Organic acid (c2)

The organic acid (c2) is at least one compound selected from the group consisting of lactic acid, dimethylolpropionic acid and methanesulfonic acid

The form of use of the organic acid (c2) is not particularly limited, and examples thereof include a solid form, a liquid form, a solution form with the organic acid (c2) dissolved in a solvent, particularly an aqueous solution form.

Content of each of the bismuth compound (c1) and the organic acid (c2) in the bismuth mixture liquid (C) is such that the molar ratio of the bismuth metal in the bismuth compound (c1) and the organic acid (c2) may preferably be 1 : 0.5 to 1: 4, more preferably 1 : 1 to 1 : 2 in terms of a ratio of Bi : organic acid.

Examples of the solvent to be used for preparation of the bismuth mixture liquid (C) include water such as ion-exchanged water, purified water and distilled water, and aqueous solvents containing water as a main component. The aqueous solvent may contain an optional organic solvent (e.g. a water-soluble or water-miscible organic solvent such as an alcohol, an ester or a ketone) in addition to water.

The bismuth mixture liquid (C) is prepared by mixing the bismuth compound (c1), the organic acid (c2) and the solvent by any means. By mixing the bismuth compound (c1), the organic acid (c2) and the solvent to prepare the bismuth mixture liquid (C) in advance, the solubility and dispersion stability of the bismuth compound (c1) are improved, so that an electrodeposition coating composition excellent in coating material stability and curability can be obtained. Details of this mechanism are not necessarily clear, and are not bound by a theory, but it can be considered that in the bismuth mixture liquid (C) prepared by mixing the bismuth compound (c1), the organic acid (c2) and the solvent, a part of the bismuth compound is dissolved with the organic acid, and a part of the bismuth compound is dispersed (e.g. dispersed like a chelate) together with the organic acid (c2), so that the bismuth compound (c1) is finely dispersed.

Pigment dispersion resin (D)

In the preparation method of the present invention, the thus-obtained bismuth mixture liquid (C) is mixed with the pigment dispersion resin (D) and the polyvalent acid (E) to prepare a bismuth dispersion liquid, and the resulting bismuth dispersion liquid is then mixed with the pigment (F) to prepare the pigment dispersion paste (ii) (pigment dispersion paste (ii) preparing step). By mixing the components in the above-described order, the dispersion stability of the pigment dispersion paste (ii) containing the bismuth compound (c1) is improved. Examples of the pigment dispersion resin (D) include an amine-modified epoxy resin (d1) having a hydroxyl value of 20 to 120 mg KOH/g and an amine-modified epoxy resin (d2) having a hydroxyl value of 150 to 650 mg KOH/g. The pigment dispersion resin (D) may contain only one or both of the amine-modified epoxy resins (d1) and (d2).

Examples of the amine-modified epoxy resin (d1) having a hydroxyl value of 20 to 120 mg KOH/g include modified epoxy resins having at least one selected from a quaternary ammonium group and a tertiary sulfonium group. For example, the modified epoxy resin having a quaternary ammonium group can be prepared by reacting an epoxy resin with a tertiary amine. As the aqueous solvent, ion-exchanged water or water containing a small amount of an alcohol, or the like is used.

The amine-modified epoxy resin (d1) having a hydroxyl value of 20 to 120 mg KOH/g can be prepared by, for example, reacting half-blocked isocyanate with a hydroxyl group of a hydroxyl group-containing epoxy resin to introduce a blocked isocyanate group.

Generally, a polyepoxide is used as the epoxy resin. This epoxide has two or more 1,2-epoxy groups on average in one molecule. Useful examples of the polyepoxide include the above-mentioned epoxy resins.

The half-blocked isocyanate used for reaction with the epoxy resin is prepared by partially blocking a polyisocyanate. Preferably, reaction of the polyisocyanate with the blocking agent is carried out by cooling the reactants to 40 to 50°C while dropping the blocking agent under stirring in the presence of an optional curing catalyst (e.g. a tin-based catalyst).

The polyisocyanate is not particularly limited as long as it has two or more isocyanate groups on average in one molecule. Specific examples thereof may include polyisocyanates which can be used in preparation of the blocked isocyanate curing agent.

Examples of the suitable blocking agent for preparing the half-blocked isocyanate include lower aliphatic alkyl monoalcohols having 4 to 20 carbon atoms. Specific examples thereof include butyl alcohol, amyl alcohol, hexyl alcohol, 2-ethylhexyl alcohol and heptyl alcohol.

The reaction of the epoxy resin with the half-blocked isocyanate is carried out preferably by keeping the reactants at 140°C for about 1 hour.

As the tertiary amine, one having 1 to 6 carbon atoms can be preferably used. Specific examples of the tertiary amine include dimethylethanolamine, trimethylamine, triethylamine, dimethylbenzylamine, diethylbenzylamine, N, N-dimethylcyclohexylamine, tri-n-butylamine, diphenethylmethylamine, dimethylaniline and N- methyl morpholine.

The neutralizing acid to be mixed with the tertiary amine is not particularly limited, and specific examples thereof include inorganic and organic acids such as hydrochloric acid, nitric acid, phosphoric acid, formic acid, acetic acid and lactic acid. The neutralizing acid may more preferably be at least one acid selected from the group consisting of formic acid, acetic acid and lactic acid. The reaction of the thus-obtained neutralizing acid salt of a tertiary amine with the epoxy resin can be carried out by a usual method. For example, the epoxy resin is dissolved in a solvent such as ethylene glycol monobutyl ether, the resulting solution is heated to 60 to 100°C, a neutralizing acid salt of a tertiary amine is dropped thereto, and the reaction mixture is held at 60 to 100°C until an acid value of 1 is attained.

Preferably, the amine-modified epoxy resin (d1) having a hydroxyl value of 20 to 120 mg KOH/g has an epoxy equivalent of 1000 to 1800. The epoxy equivalent is more preferably 1200 to 1700. In addition, it may be preferable that the amine-modified epoxy resin (d1) having a hydroxyl value of 20 to 120 mg KOH/g has a number average molecular weight of 1500 to 2700.

The amount (milligram equivalent) of quaternary ammonium groups in the amine-modified epoxy resin (d1) having a hydroxyl value of 20 to 120 mg KOH/g may preferably be 35 to 70 meq per 100 g, more preferably 35 to 55 meq per 100 g. When the amount of quaternary ammonium groups is in the above-mentioned range, there is an advantage that pigment dispersion performance is improved, and the coating workability of the electrodeposition coating composition is improved.

The amine-modified epoxy resin (d2) having a hydroxyl value of 150 to 650 mg KOH/g can be prepared by reacting an amine compound with an oxirane ring in an epoxy resin skeleton to perform modification. The amine-modified epoxy resin (d2) having a hydroxyl value of 150 to 650 mg KOH/g can be prepared in the same manner as in the case of the amine-modified epoxy resin in the aminated resin (A). As the amine-modified epoxy resin (d2) having a hydroxyl value of 150 to 650 mg KOH/g, the amine-modified epoxy resin in the aminated resin (A) may be used as it is. In the present invention, the same resin or different resins may be used as the amine-modified epoxy resin (d2) having a hydroxyl value of 150 to 650 mg KOH/g and the amine-modified epoxy resin in the aminated resin (A).

Preferably, the amines to be reacted with the oxirane ring of the epoxy resin in preparation of the amine-modified epoxy resin (d2) having a hydroxyl value of 150 to 650 mg KOH/g include 50 to 95% by mass of the secondary amine, 0 to 30% by mass of the secondary amine having a blocked primary amine, and 0 to 20% by mass of the primary amine.

The number average molecular weight of the amine-modified epoxy resin (d2) having a hydroxyl value of 150 to 650 mg KOH/g may preferably be in a range of 1,000 to 5,000. It may be preferable the number average molecular weight is in the above-mentioned range because favorable pigment dispersion stability can be attained. The number average molecular weight of the amine-modified epoxy resin (d2) having a hydroxyl value of 150 to 650 mg KOH/g may more preferably be in a range of 2,000 to 3,500. When the number average molecular weight of the amine-modified epoxy resin (d2) having a hydroxyl value of 150 to 650 mg KOH/g is 1,000 or more, physical properties, such as solvent resistance and corrosion resistance, of the resulting cured electrodeposition coating film are improved. In addition, when the number average molecular weight of the amine-modified epoxy resin (d2) having a hydroxyl value of 150 to 650 mg KOH/g is 5,000 or less, the dispersibility and dispersion stability of the resulting pigment dispersion paste (ii) are improved.

Preferably, the amine-modified epoxy resin (d2) having a hydroxyl value of 150 to 650 mg KOH/g has a base milligram equivalent (MEQ (B)) of 50 to 350 based on 100 g of the resin solid content. When the MEQ (B) of the amine-modified epoxy resin (d2) is not in the above-mentioned range, particularly when the MEQ (B) is less than 50, the pigment dispersion paste (ii) may have poor storage stability. The base milligram equivalent (MEQ (B)) of the amine-modified epoxy resin (d2) based on 100 g of the solid content can be adjusted by the type and amount of the amine compound that is reacted in preparation of the amine-modified epoxy resin (d2).

Here, the MEQ (B) stands for mg equivalent (base), which refers to a mg equivalent of a base per 100 g of a resin solid content. The MEQ (B) can be measured in the following manner: about 10 g of the solid content of the electrodeposition coating composition is precisely weighed, and dissolved in about 50 ml of a solvent (THF: tetrahydrofuran), 7.5 ml of acetic anhydride and 2.5 ml of acetic acid are then added, and potentiometric titration is performed with a 0.1 N perchloric acid-acetic acid solution using an automatic potentiometric titrator (e.g. APB-410 manufactured by KYOTO ELECTRONICS MANUFACTURING CO., LTD.), whereby the amount of a base contained in the amine-modified epoxy resin (d2) is quantitatively determined.

In the present invention, it may be preferable that the amine-modified epoxy resin (d2) to be used in preparation of the pigment dispersion paste (ii) is prepared in the form of a resin emulsion. As one aspect of a method for preparing a resin emulsion, mention is made of a method in which a resin emulsion is prepared in the same manner as in the case of the resin emulsion (i). Specifically, the amine-modified epoxy resin (d2) having a hydroxyl value of 150 to 650 mg KOH/g and the blocked isocyanate curing agent (B) are each dissolved in an organic solvent to prepare solutions, these solutions are mixed, and the mixture is then dispersed in water using a neutralizing acid, whereby an amine-modified epoxy resin emulsion can be prepared. As another aspect of a method for preparing a resin emulsion, the amine-modified epoxy resin (d2) having a hydroxyl value of 150 to 650 mg KOH/g is dissolved in an organic solvent to prepare a solution, and the solution is dispersed in water using a neutralizing acid, whereby an amine-modified epoxy resin emulsion can be prepared. Examples of the neutralizing acid that can be used for preparation of the resin emulsion include organic acids such as methanesulfonic acid, sulfamic acid, lactic acid, dimethylolpropionic acid, formic acid and acetic acid. It may be more preferable to use at least one selected from the group consisting of formic acid, acetic acid and lactic acid as the neutralizing acid.

Preferably, the pigment dispersion resin (D) contains both the amine-modified epoxy resin (d1) having a hydroxyl value of 20 to 120 mg KOH/g and the amine-modified epoxy resin (d2) having a hydroxyl value of 150 to 650 mg KOH/g. When both the amine-modified epoxy resins (d1) and (d2) are contained, the resin solid content ratio of (d1)/(d2) may preferably be in a range of 100/1 to 1/10, more preferably in a range of 100/3 to 1/1.

In addition, when the pigment dispersion resin (D) contains the amine-modified epoxy resin (d2), the amount of the amine-modified epoxy resin (d2) may preferably be 0.1 to 1000 parts by mass based on 100 parts by mass of the solid content of the polyvalent acid (E) described below.

Polyvalent acid (E)

In this specification, the "polyvalent acid" refers to a compound having two or more monovalent acid groups, or a compound having a di-or-more-valent acid group.

In this specification, the condensed phosphoric acid means an inorganic compound having two or more phosphoric acid groups. The condensed phosphoric acid can be prepared by, for example, a dehydration reaction of ortho-phosphoric acid ($H_3PO_4$) or a reaction similar thereto.

The polyvalent acid (E) is at least one selected from the group consisting of tartaric acid, citric acid, phosphoric acid, condensed phosphoric acid, malic acid and polyacrylic acid, more preferably at least one selected from the group consisting of tartaric acid, citric acid and malic acid.

An amount of the polyvalent acid (E) contained in the pigment dispersion paste (ii) may preferably be from 0.01 to 10 parts by mass, more preferably 0.08 to 5 parts by mass, still more preferably 0.09 to 3.5 parts by mass, based on 100 parts by mass of the resin solid content of the pigment dispersion resin (D). When the amount of the polyvalent acid (E) is less than 0.01 parts by mass, the horizontal appearance may be deteriorated. When the amount of the polyvalent acid (E) is more than 10 parts by mass, curability may be deteriorated.

When the bismuth mixture liquid (C) obtained by mixing the bismuth compound (c1), the organic acid (c2) and the solvent is mixed with the pigment dispersion resin (D) and the polyvalent acid (E), followed by mixing the pigment (F), the dispersion stability of the resulting pigment dispersion paste (ii) is improved, so that an electrodeposition coating composition excellent in coating material stability and curability can be obtained. Details of this mechanism are not necessarily clear, and are not bound by a theory, but can be considered as follows.

It can be considered that in the bismuth mixture liquid (C) prepared by mixing the bismuth compound (c1), the organic acid (c2) and the solvent, a part of the bismuth compound is dissolved with the organic acid, and a part of the bismuth compound is dispersed (e.g. dispersed like a chelate) together with the organic acid (c2), so that the bismuth compound (c1) is finely dispersed. Here, by mixing the bismuth mixture liquid (C) and the pigment dispersion resin (D), at least a part of the bismuth compound (c1) contained in the bismuth mixture liquid (C) is covered with the pigment dispersion resin (D), so that the dispersion stability of the bismuth compound (c1) is slightly improved. However, it is considered that the covering state of the bismuth compound at this stage is not sufficient, and when the pigment (F) is added, the pigment (F) and the bismuth compound (c1) may react with each other, leading to collapse of the covering state. Thus, use of the polyvalent acid (E) in combination with the pigment dispersion resin (D) can cause the pigment dispersion resin (D) to be self-aggregated, leading to consolidation of covering of the pigment dispersion resin (D) and the bismuth compound (c1) which has been moderate. Since the self-aggregation force is strong, there is an advantage that by using the polyvalent acid (E) in combination with the pigment dispersion resin (D), favorable dispersion stability can be attained even when the amount of the pigment dispersion resin (D) is reduced.

The diatomaceous earth filtration permeability of bismuth of the bismuth dispersion liquid obtained by mixing the bismuth mixture liquid (C), the pigment dispersion resin (D) and the polyvalent acid (E) may preferably be 50 % by mass or less. The diatomaceous earth means a material existing in the nature as a diatom fossil. In this specification, the "diatomaceous earth filtration" means filtration performed using a diatomaceous earth filter layer or a diatomaceous earth filter plate in which diatomaceous earth is stacked (pre-coated) on a filter medium surface in advance. In the filtration, diatomaceous earth and an optional auxiliary (such as a fibrous substance such as cellulose) may be added to and mixed with the bismuth dispersion liquid as necessary, followed by performing filtration using a diatomaceous earth filter layer or a diatomaceous earth filter plate. In this method, the mixed diatomaceous earth is further stacked on the diatomaceous earth filter layer or filter plate as filtration proceeds. Examples of the diatomaceous earth include commercially available diatomaceous earth, e.g. Radiolite # 700 from Showa Chemical Industry Co., Ltd.

In this specification, "the diatomaceous earth filtration permeability of bismuth" means a change in content of a bismuth component before diatomaceous earth filtration and after diatomaceous earth filtration, which is a value determined by the following formula:

```
[content of bismuth component after diatomaceous earth
filtration]/[content of bismuth component before diatomaceous
earth filtration] × 100.
```

A low diatomaceous earth filtration permeability of bismuth means that permeation of a larger amount of the bismuth compound in diatomaceous earth filtration is difficult, i.e. a larger amount of the bismuth compound is covered with the pigment dispersion resin (D) and the polyvalent acid (E). When the diatomaceous earth filtration permeability of bismuth is 50 % by massor less in the bismuth dispersion liquid obtained by mixing the bismuth mixture liquid (C), the pigment dispersion resin (D) and the polyvalent acid (E), the amount of the bismuth compound (c1) which is at least partially uncovered is relatively small. Here, it is considered that even when the pigment dispersion paste (ii) is subsequently prepared by adding a pigment, aggregation of the pigment component derived from the uncovered bismuth compound hardly occurs. Accordingly, there is an advantage that a cured electrodeposition coating film having an excellent coating film appearance can be obtained.

Pigment (F)

The pigment (F) is a pigment that is usually used in an electrodeposition coating composition. Examples of the pigment include inorganic pigments and organic pigments that are usually used, i.e. coloring pigments such as titanium white (titanium dioxide), carbon black and red iron oxide; extender pigments such as kaolin, talc, aluminum silicate, calcium carbonate, mica and clay; and anticorrosive pigments such as iron phosphate, aluminum phosphate, calcium phosphate, aluminum tripolyphosphate, aluminum phosphomolybdate and aluminum zinc phosphomolybdate.

Preferably, the pigment (F) may be used in an amount of 1 to 30% by mass based on the resin solid content of the cationic electrodeposition coating composition.

Preparation of pigment dispersion paste (ii)

The pigment dispersion paste (ii) in the present invention is prepared by the step of mixing the bismuth compound (c1), the organic acid (c2) and the solvent to prepare the bismuth mixture liquid (C), then adding the resulting bismuth mixture liquid (C), the pigment dispersion resin (D) and the polyvalent acid (E) to prepare a bismuth dispersion liquid, and then mixing the resulting bismuth dispersion liquid and the pigment (F).

The bismuth compound (c1), the organic acid (c2) and the solvent are mixed beforehand prior to other components, so that the bismuth mixture liquid (C) is prepared. By mixing the bismuth compound (c1) and the organic acid (c2) beforehand to prepare the bismuth mixture liquid (C), the solubility/dispersibility of the bismuth compound is improved, and thus catalytic activity is improved, so that a coating film excellent in curability and corrosion resistance can be formed.

Mixing of the bismuth compound (c1), the organic acid (c2) and the solvent can be performed by, for example, dispersing particles of the bismuth compound (c1) in an aqueous solution of the organic acid (c2), which is obtained by mixing the organic acid (c2) and the solvent (particularly an aqueous solvent), by stirring. Conditions such as a temperature and a stirring rate in mixing may be conditions that are usually employed in production of the coating composition. For example, mixing can be performed at 10 to 30°C, preferably at room temperature at such a stirring rate that a stirring flow is generated. The stirring time can be appropriately selected according to the scale of a reaction system. For example, the stirring time can be selected within a range of 0.1 to 24 hours.

A bismuth dispersion liquid is prepared by mixing the thus-obtained bismuth mixture liquid (C) with the pigment dispersion resin (D) and the polyvalent acid (E). The order in which the bismuth mixture liquid (C), the pigment dispersion resin (D) and the polyvalent acid (E) are mixed may be arbitrary. For example, the components (C), (D) and (E) may be simultaneously added and mixed, the components (C) and (D) may be mixed, followed by adding the component (E), or the components (C) and (E) may be mixed, followed by adding the component (D). Conditions such as a temperature and a stirring rate in the mixing may be conditions that are usually employed in production of the coating composition. For example, mixing can be performed at 10 to 50°C, preferably 20 to 40°C at such a stirring rate that a stirring flow capable of dispersing the components (C), (D) and (E) is generated. The stirring time can be arbitrarily selected depending on the scale of a reaction system, a stirrer and so on. The stirring time may be, for example, 5 minutes to 1 hour.

An amount of the pigment dispersion resin (D) is such that a ratio (solid content mass ratio) of the pigment (F) and the pigment dispersion resin (D), which are contained in the pigment dispersion paste (ii), may preferably be in a range of 1/0.1 to 1/1.5, more preferably in a range of 1/0.1 to 1/1.1 in terms of a ratio of pigment (F)/pigment dispersion resin (D). When the amount of the pigment dispersion resin (D) is above the above-mentioned range, curing performance may be deteriorated. In addition, when the amount of the pigment dispersion resin (D) is below the above-mentioned range, defective pigment dispersion may occur.

The bismuth dispersion liquid prepared by mixing the bismuth mixture (C), the pigment dispersion resin (D) and the polyvalent acid (E) is mixed with the pigment (F) to prepare the pigment dispersion paste (ii). Conditions such as a temperature and a stirring rate in the mixing may be conditions that are usually employed in production of the coating composition. For example, mixing can be performed at 10 to 50°C, preferably 20 to 40°C at such a stirring rate that a stirring flow capable of dispersing the pigment is generated. For example, the stirring time may preferably be such that stirring is performed until the pigment has a dispersion grain size of 10 $\mu$m or less. Here, the dispersion grain size of the pigment can be determined by measuring the volume average particle size of the pigment.

As a further advantage of the method of the present invention, the concentration of the bismuth compound (c1) contained in the pigment dispersion paste (ii) can be set higher. When a bismuth compound is directly added to a pigment dispersion paste, storage stability of the pigment dispersion paste is generally deteriorated. Concentration of a bismuth compound considerably affects storage stability of a pigment dispersion paste. For example, storage stability of a pigment dispersion paste is generally deteriorated as concentration of the bismuth compound increases. On the other hand, the pigment dispersion paste which contains a bismuth compound and is prepared by the method of the present invention is characterized by having excellent storage stability although concentration of the bismuth compound contained in the pigment dispersion paste is high. The concentration of the bismuth compound (c1) contained in the pigment dispersion paste (ii) may preferably be 10000 to 30000 ppm in terms of a metal element.

The amount of the bismuth compound (c1) contained in the pigment dispersion paste (ii) may preferably be 3 to 30 parts by mass, more preferably 5 to 25 parts by mass based on 100 parts by mass of the pigment dispersion resin (D) in terms of a metal element.

Production of electrodeposition coating composition

The electrodeposition coating composition in the present invention can be prepared by mixing the resin emulsion (i) and the pigment dispersion paste (ii). A mixing ratio of the resin emulsion (i) and the pigment dispersion paste (ii) (the resin emulsion (i) : pigment dispersion paste (ii)) may preferably be in a range of 1 : 0.1 to 1 : 0.4, more preferably in a range of 1 : 0.15 to 1 : 0.3 in terms of a solid content mass ratio.

The electrodeposition coating composition in the present invention may further contain a salt of a rare earth metal selected from the group consisting of neodymium, yttrium, lanthanum, cerium, praseodymium and ytterbium. Specific examples of the salt of a rare earth metal include acetates, nitrates, sulfates, sulfamates, lactates, formates and carbonates of rare earth metals.

When the electrodeposition coating composition contains a salt of a rare earth metal, there is an advantage that corrosion resistance is improved, and in particular, edge rust prevention property is improved. When the electrodeposition coating composition contains a salt of a rare earth metal, a content of the salt of a rare earth metal in terms of a metal element of the rare earth metal may preferably be 0.0001 to 0.5% by mass based on the resin solid content of the resin emulsion (i).

The salt of a rare earth metal can be added in the electrodeposition coating composition by any method. For example, mention is made of a method in which an aqueous solution of a salt of a rare earth metal is prepared in advance, and added to the electrodeposition coating composition.

The electrodeposition coating composition in the present invention may contain an amino acid as necessary. When the electrodeposition coating composition contains an amino acid, an amino acid may be further mixed at the time of mixing the bismuth compound (c1), the organic acid (c2) and the solvent in advance in preparation of the pigment dispersion paste (ii). By further mixing an amino acid, an amino acid having strong chelating property can be coordinated to the bismuth compound, and accordingly, dissolution stability of the bismuth compound can be improved.

As an amino acid, for example, glycine, aspartic acid or a mixture thereof can be used. When an amino acid is used, the amino acid is used in such an amount that a molar ratio of the bismuth compound (c1) and the amino acid (Bi : amino acid) may preferably be 1 : 0.5 to 1 : 4.0, more preferably 1 : 1 to 1 : 2.

A solid content of the electrodeposition coating composition in the present invention may preferably be 1 to 30% by mass based on the total amount of the electrodeposition coating composition. When the solid content of the electrodeposition coating composition is less than 1% by mass, a deposition amount of the electrodeposition coating film decreases, so that it may be difficult to secure sufficient corrosion resistance. When the resin solid content of the electrodeposition coating composition is more than 30% by mass, throwing power or coating appearance may be deteriorated.

A pH of the electrodeposition coating composition in the present invention may preferably be 4.5 to 7. When the pH of the electrodeposition coating composition is less than 4.5, the electrodeposition coating composition may have poor corrosion resistance, and there may be the problem that a sludge is generated in electrodeposition coating. The pH of the electrodeposition coating composition can be set within the above-mentioned range by adjusting the amount of a neutralizing acid to be used, the addition amount of a free acid added, and so on.

The pH of the electrodeposition coating composition can be measured using a commercially available pH meter having a temperature compensation function.

A milligram equivalent (MEQ (A)) of the acid based on 100 g of the solid content of the electrodeposition coating composition may preferably be 40 to 120. The milligram equivalent (MEQ (A)) of the acid based on 100 g of the resin solid content of the electrodeposition coating composition can be adjusted by an amount of the neutralized acid and an amount of a free acid.

Here, the MEQ (A) stands for mg equivalent (acid), which is the sum of mg equivalents of all acids per 100 g of the solid content of the coating composition. The MEQ (A) can be measured in the following manner: about 10 g of the solid content of the electrodeposition coating composition is precisely weighed, and dissolved in about 50 ml of a solvent (THF: tetrahydrofuran), and potentiometric titration is then performed with a 1/10 N NaOH solution to quantitatively determine the amount of an acid contained in the electrodeposition coating composition.

Preferably, the electrodeposition coating composition does not substantially contain any of a tin compound and a lead compound. In this specification, the phrase "the electrodeposition coating composition does not substantially contain any of a tin compound and a lead compound" means that a concentration of a lead compound contained in the electrodeposition coating composition does not exceed 50 ppm in terms of a lead metal element, and a concentration of an organotin compound does not exceed 50 ppm in terms of a tin metal element. The electrodeposition coating composition in the present invention contains the bismuth compound (c1). Therefore, it is not necessary to use a lead compound or an organotin compound as a curing catalyst. Accordingly, an electrodeposition coating composition which does not substantially contain any of a tin compound and a lead compound.

The electrodeposition coating composition in the present invention may contain additives that are commonly used in the field of coating materials, for example an organic solvent such as ethylene glycol monobutyl ether, ethylene glycol monohexyl ether, ethylene glycol monoethylhexyl ether, propylene glycol monobutyl ether, dipropylene glycol monobutyl ether or propylene glycol monophenyl ether, an antidrying agent, a surfactants such as an antifoaming agent, a viscosity modifier such as acrylic resin fine particles, a cissing inhibitor, an inorganic anticorrosive agent such as a vanadium salt, copper, iron, manganese, magnesium or a calcium salt, and the like as necessary. In addition to the above-mentioned additives, a known auxiliary complexing agent, a buffer, a smoothing agent, a stress relaxation agent, a brightener, a semi-brightener, an antioxidant, an ultraviolet absorber and the like may be blended according to a purpose. These additives may be mixed during preparation of the resin emulsion (i), mixed during preparation of the pigment dispersion paste (ii), or mixed during or after mixing of the resin emulsion (i) and the pigment dispersion paste (ii).

The electrodeposition coating composition in the present invention may contain other coating film-forming resin components in addition to the aminated resin (A). Examples of other coating film-forming resin components include acrylic resins, polyester resins, urethane resins, butadiene resins, phenol resins and xylene resins. Other coating film-forming resin components may be an aminated resin which does not correspond to the above-described aminated resin (A). Phenol resins and xylene resins may be preferable as other coating film-forming resin components that may be contained in the electrodeposition coating composition. Examples of the phenol resin or xylene resin include xylene resins having 2 or more and 10 or less aromatic rings.

According to the preparation method of the present invention, a cationic electrodeposition coating composition which contains a bismuth compound and is excellent in coating material stability, curability, coating film appearance and so on can be prepared. Further, the method of the present invention has an advantage that since it is not necessary to prepare an aqueous solution of a bismuth compound having a low solubility in an aqueous medium, the electrodeposition coating composition can be more easily and conveniently prepared. According to the preparation method of the present invention, a cationic electrodeposition coating composition can be easily prepared which is excellent in curability, coating material stability and coating film appearance although the cationic electrodeposition coating composition does not substantially contain any of an organotin compound and a lead compound.

Electrodeposition coating and formation of electrodeposition coating film

An object to be coated can be subjected to electrodeposition coating and formation of an electrodeposition coating film using the electrodeposition coating composition in the present invention.

In electrodeposition coating using the electrodeposition coating composition in the present invention, an object to be coated is set to a cathode, and a voltage is applied between the cathode and an anode. Accordingly, an electrodeposition coating film is deposited on the object to be coated.

In an electrodeposition coating step, an object to be coated is immersed in the electrodeposition coating composition, and a voltage of 50 to 450 V is then applied to perform electrodeposition coating. When the applied voltage is less than 50 V, electrodeposition may be insufficient, and when the applied voltage is more than 450 V, the coating film may be broken, leading to an abnormal appearance. During electrodeposition coating, the bath liquid temperature of the coating composition is usually adjusted to 10 to 45°C.

The time for applying the voltage varies depending on electrodeposition conditions, but may be generally 2 to 5 minutes.

The thickness of the electrodeposition coating film is such that a thickness of the electrodeposition coating film finally obtained by heating and curing may preferably be 5 to 40 $\mu$m, more preferably 10 to 25 $\mu$m. When the thickness of the electrodeposition coating film is less than 5 $\mu$m, corrosion resistance may be insufficient. On the other hand, when the thickness of the electrodeposition coating film is more than 40 $\mu$m, the coating material may be wasted.

After completion of the electrodeposition process, the electrodeposition coating film obtained as described above is heated at 120 to 260°C, preferably 140 to 220°C, for 10 to 30 minutes as it is or after being rinsed, whereby a heated and cured electrodeposition coating film is formed.

As an object to be coated with the electrodeposition coating composition in the present invention, it is possible to use various materials which can be fed with electricity. Examples of the usable object to be coated include cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based steel sheets and tin-based plated steel sheets.

Examples

The present invention will be described more in detail by way of the following examples, but the present invention is not limited to these examples. In examples, "parts" and "%" are on a mass basis unless otherwise specified.

Production Example 1 Production of amine-modified epoxy resin (d1) as pigment dispersion resin (D)

Preparation of 2-ethylhexanol half-blocked isophorone diisocyanate

222.0 parts of isophorone diisocyanate (hereinafter, abbreviated as IPDI) was added in a reaction vessel equipped with a stirrer, a condenser tube, a nitrogen inlet tube and a thermometer, and was diluted with 39.1 parts of methyl isobutyl ketone (MIBK), and 0.2 parts of dibutyltin dilaurate was added thereto. Thereafter, the mixture was heated to 50°C, and 131.5 parts of 2-ethylhexanol was then added dropwise under stirring in a dry nitrogen atmosphere over 2 hours to obtain 2-ethylhexanol half-blocked IPDI (solid content: 90.0% by mass).

Preparation of quaternization agent

87.2 parts of dimethylethanolamine, 117.6 parts of a 75% lactic acid aqueous solution and 39.2 parts of ethylene glycol mono-n-butyl ether were sequentially added in a reaction vessel, and stirred at 65°C for 30 minutes to prepare a quaternization agent.

Production of pigment dispersion resin

710.0 parts of a bisphenol A-type epoxy resin (trade name: DER-331 J, manufactured by The Dow Chemical Company) and 289.6 parts of bisphenol A were added in a reaction vessel, reacted in a nitrogen atmosphere at 150 to 160°C for 1 hour, and then cooled to 120°C, and 498.8 parts of the previously prepared 2-ethylhexanol half-blocked IPDI (MIBK solution) was then added. The reaction mixture was stirred at 110 to 120°C for 1 hour, 463.4 parts of ethylene glycol mono-n-butyl ether was added, the mixture was cooled to 85 to 95°C, and 196.7 parts of the previously prepared quaternization agent was added. The reaction mixture was held at 85 to 95°C until the acid value was 1, and 964 parts of deionized water was then added to obtain a desired pigment dispersion resin (solid content: 50% by mass). The hydroxyl value of the resulting pigment dispersion resin was 75 mg KOH/g.

Production Example 2-1 Production of aminated resin (A-1)

92 parts of methyl isobutyl ketone, 940 parts of a bisphenol A-type epoxy resin (trade name: DER-331 J, manufactured by The Dow Chemical Company), 382 parts of bisphenol A, 63 parts of octylic acid and 2 parts of dimethylbenzylamine were added, and reacted until the epoxy equivalent was 1110 g/eq while the inside of a reaction vessel was held at a temperature of 140°C, and cooling was then performed until the temperature of the inside of the reaction vessel was 120°C. A mixture of 78 parts of diethylenetriamine diketimine (methyl isobutyl ketone solution having a solid content of 73%) and 92 parts of diethanolamine was then added, and reacted at 120°C for 1 hour to obtain an aminated resin (A-1) (cation-modified epoxy resin). The resin had a number average molecular weight of 2,560, an amine value (milligram equivalent of a base based on 100 g of the resin solid content: MEQ (B)) of 50 mg KOH/g (where the amine value derived from the primary amine was 14 mg KOH/g), and a hydroxyl value of 240 mg KOH/g.

Production Example 2-2 Production of aminated resin (A-2)

92 parts of methyl isobutyl ketone, 940 parts of a bisphenol A-type epoxy resin (trade name: DER-331 J, manufactured by The Dow Chemical Company), 382 parts of bisphenol A, 63 parts of octylic acid and 2 parts of dimethylbenzylamine were added, and reacted until the epoxy equivalent was 850 g/eq while the inside of a reaction vessel was held at a temperature of 140°C, and cooling was then performed until the temperature of the inside of the reaction vessel was 120°C. A mixture of 100 parts of diethylenetriamine diketimine (methyl isobutyl ketone solution having a solid content of 73%) and 118 parts of diethanolamine was then added, and reacted at 120°C for 1 hour to obtain an aminated resin (A-2) (cation-modified epoxy resin). The resin had a number average molecular weight of 2,560, an amine value of 72 mg KOH/g (where the amine value derived from the primary amine was 21 mg KOH/g), and a hydroxyl value of 270 mg KOH/g.

Production Example 3-1 Production of blocked isocyanate curing agent (B-1)

1680 parts of hexamethylene diisocyanate (HDI) and 732 parts of MIBK were added in a reaction vessel, and heated to 60°C. A solution of 346 parts of trimethylolpropane in 1067 parts of MEK oxime was added thereto in dropwise at 60°C over 2 hours. Further, the mixture was heated at 75°C for 4 hours, disappearance of an absorption based on an isocyanate group was then confirmed in IR spectrum measurement. The mixture was allowed to cool, and 27 parts of MIBK was then added to obtain a blocked isocyanate curing agent (B-1) having a solid content of 78%. The isocyanate group value was 252 mg KOH/g.

Production Example 3-2 Production of blocked isocyanate curing agent (B-2)

1340 parts of 4,4'-diphenylmethane diisocyanate and 277 parts of MIBK were added in a reaction vessel, and heated to 80°C, and a solution of 226 parts of ε-caprolactam in 944 parts of butyl cellosolve was then added dropwise at 80°C for 2 hours. Further, the mixture was heated at 100°C for 4 hours, disappearance of an absorption based on an isocyanate group was then confirmed in IR spectrum measurement, the mixture was allowed to cool, and 349 parts of MIBK was then added to obtain a blocked isocyanate curing agent (B-2) (solid content: 80%). The isocyanate group value was 251 mg KOH/g.

Production Example 4 Production of resin emulsion (i) containing aminated resin and blocked isocyanate curing agent

350 parts (solid content) of the aminated resin (A-1) obtained in Production Example 2-1 was mixed with 75 parts (solid content) of the blocked isocyanate curing agent (B-1) obtained in Production Example 3-1 and 75 parts (solid content) of the blocked isocyanate curing agent (B-2) obtained in Production Example 3-2, and ethylene glycol mono-2-ethylhexyl ether was added in an amount of 3% (15 parts) based on the solid content. Next, the mixture was neutralized by adding formic acid in such a manner that the addition amount corresponded to a resin neutralization ratio of 40%, the mixture was slowly diluted by adding ion-exchanged water, and methyl isobutyl ketone was then removed under a reduced pressure so that the solid content was 40%, thereby obtaining a resin emulsion (i).

Production Example 5-1 Production of emulsion (1) of amine-modified epoxy resin (d2)

To 350 parts (solid content) of the aminated resin (A-1) obtained in Production Example 2-1, ethylene glycol mono-2-ethylhexyl ether was added in an amount of 3% (15 parts) based on the solid content. Next, the mixture was neutralized by adding formic acid in such a manner that the addition amount corresponded to a resin neutralization ratio of 40%, the mixture was slowly diluted by adding ion-exchanged water, and methyl isobutyl ketone was then removed under a reduced pressure so that the solid content was 40%, thereby obtaining an emulsion (1) of the amine-modified epoxy resin (d2).

Production Example 5-2 Production of emulsion (2) of amine-modified epoxy resin (d2)

To 350 parts (solid content) of the aminated resin (A-2) obtained in Production Example 2-2, ethylene glycol mono-2-ethylhexyl ether was added in an amount of 3% (15 parts) based on the solid content. Next, the mixture was neutralized by adding formic acid in such a manner that the total addition amount corresponded to a resin neutralization ratio of 40%, the mixture was slowly diluted by adding ion-exchanged water, and methyl isobutyl ketone was then removed under a reduced pressure so that the solid content was 40%, thereby obtaining an emulsion (2) of the amine-modified epoxy resin (d2).

Example 1

Production of pigment dispersion paste (ii)

5.3 parts of a 50% lactic acid aqueous solution and 6.9 parts of bismuth oxide were mixed with ion-exchanged water with stirring. To this was added 60 parts of the amine-modified epoxy resin (d1) being the pigment dispersion resin (D), which was obtained in Production Example 1, and the mixture was stirred at 1000 rpm for 1 hour at room temperature.

Thereafter, 0.028 parts of tartaric acid was added and mixed, 1 part of carbon being a pigment, 40 parts of titanium oxide and 59 parts of Satintone (calcined kaolin) were further added, and the mixture was stirred at 2000 rpm for 1 hour at 40°C using a sand mill, thereby obtaining a pigment dispersion paste (ii) having a Bi metal concentration as shown in Table 1 (solid content concentration: 47 % by mass).

Production of electrodeposition coating composition

516 parts of ion-exchanged water, 393 parts of the resin emulsion (i) prepared in Production Example 4, and 91 parts of the pigment dispersion paste (ii) were added in a stainless steel vessel, and the mixture was then aged at 40°C for 16 hours to obtain an electrodeposition coating composition.

Example 2

Except that the amount of tartaric acid being the polyvalent acid (E) was changed to 0.138 parts, the same procedure as in Example 1 was carried out to prepare a pigment dispersion paste (ii) having a Bi metal concentration as shown in Table 1 (solid content concentration: 47 % by mass) .

Using the resulting pigment dispersion paste (ii), an electrodeposition coating composition was obtained in the same procedure as in Example 1.

Example 3

Except that the amount of tartaric acid being the polyvalent acid (E) was changed to 0.83 parts, the same procedure as in Example 1 was carried out to prepare a pigment dispersion paste (ii) having a Bi metal concentration as shown in Table 1 (solid content concentration: 47 % by mass) .

Using the resulting pigment dispersion paste (ii), an electrodeposition coating composition was obtained in the same procedure as in Example 1.

Example 4

Production of pigment dispersion paste (ii)

5.3 parts of a 50% lactic acid aqueous solution and 6.9 parts of bismuth oxide were mixed with ion-exchanged water with stirring. To this was added 60 parts of the amine-modified epoxy resin (d1) being the pigment dispersion resin (D), which was obtained in Production Example 1, and the mixture was stirred at 1000 rpm for 1 hour at room temperature.

Thereafter, 3 parts (in terms of a resin solid content) of the emulsion (1) of the amine-modified epoxy resin (d2), which was obtained in Production Example 5-1, was added, 0.14 parts of tartaric acid was added and mixed, 1 part of carbon being a pigment, 40 parts of titanium oxide and 59 parts of Satintone (calcined kaolin) were further added, and the mixture was stirred at 2000 rpm for 1 hour at 40°C using a sand mill, thereby obtaining a pigment-dispersion paste (ii) having a Bi metal concentration as shown in Table 1 (solid content concentration: 47 % by mass).

Production of electrodeposition coating composition

Using the resulting pigment dispersion paste (ii), an electrodeposition coating composition was obtained in the same procedure as in Example 1.

Example 5

Production of pigment dispersion paste (ii)

Except that the amount of tartaric acid being the polyvalent acid (E) was changed to 0.421 parts, the same procedure as in Example 4 was carried out to prepare a pigment dispersion paste (ii) having a Bi metal concentration as shown in Table 1 (solid content concentration: 47 % by mass) .

Production of electrodeposition coating composition

Using the resulting pigment dispersion paste (ii), an electrodeposition coating composition was obtained in the same procedure as in Example 1.

Example 6

Production of pigment dispersion paste (ii)

Except that the amount of the emulsion (1) of the amine-modified epoxy resin (d2), which was obtained in Production Example 5-1, was changed to 30 parts (in terms of resin solid content), and the amount of tartaric acid being the polyvalent acid (E) was changed to 0.034 parts, the same procedure as in Example 4 was carried out to prepare a pigment dispersion paste (ii) having a Bi metal concentration as shown in Table 1 (solid content concentration: 47 % by mass) .

Production of electrodeposition coating composition

Using the resulting pigment dispersion paste (ii), an electrodeposition coating composition was obtained in the same procedure as in Example 1.

Example 7

Except that the amount of tartaric acid being the polyvalent acid (E) was changed to 1.02 parts, the same procedure as in Example 6 was carried out to prepare a pigment dispersion paste (ii) having a Bi metal concentration as shown in Table 1 (solid content concentration: 47 % by mass) .
Using the resulting pigment dispersion paste (ii), an electrodeposition coating composition was obtained in the same procedure as in Example 1.

Example 8

Except that 7.7 parts of bismuth hydroxide was used in place of 6.9 parts of bismuth oxide, the same procedure as in Example 4 was carried out to prepare a pigment dispersion paste (ii) having a Bi metal concentration as shown in Table 1 (solid content concentration: 47 % by mass).
Using the resulting pigment dispersion paste (ii), an electrodeposition coating composition was obtained in the same procedure as in Example 1.

Example 9

Production of pigment dispersion paste (ii)

5.3 parts of a 50% lactic acid aqueous solution and 6.9 parts of bismuth oxide were mixed with ion-exchanged water with stirring. To this was added 100 parts of the amine-modified epoxy resin (d1) being the pigment dispersion resin (D), which was obtained in Production Example 1, and the mixture was stirred at 1000 rpm for 1 hour at room temperature.
Thereafter, 3 parts (in terms of a resin solid content) of the emulsion (2) of the amine-modified epoxy resin (d2), which was obtained in Production Example 5, was added, next, 0.163 parts of tartaric acid was added and mixed, and, 1 part of carbon, 40 parts of titanium oxide and 59 parts of Satintone (calcined kaolin) (these being a pigment) were further added, and the mixture was stirred at 2000 rpm for 1 hour at 40°C using a sand mill, thereby obtaining a pigment-dispersion paste (ii) having a Bi metal concentration as shown in Table 1 (solid content concentration: 47 % by mass).

Production of electrodeposition coating composition

Using the resulting pigment dispersion paste (ii), an electrodeposition coating composition was obtained in the same procedure as in Example 1.

Example 10

Except that the amount of the amine-modified epoxy resin (d1) being the pigment dispersion resin (D) was changed to 200 parts, and the amount of tartaric acid being the polyvalent acid (E) was changed to 0.216 parts, the same procedure as in Example 9 was carried out to prepare a pigment dispersion paste (ii) having a Bi metal concentration as shown in Table 1 (solid content concentration: 47 % by mass) .

Using the resulting pigment dispersion paste (ii), an electrodeposition coating composition was obtained in the same procedure as in Example 1.

Example 11

Except that as the organic acid (c2), 8.0 parts of dimethylolpropionic acid (DMPA) was used in place of lactic acid, the same procedure as in Example 4 was carried out to prepare a pigment dispersion paste (ii) having a Bi metal concentration as shown in Table 1 (solid content concentration: 47 % by mass).

Using the resulting pigment dispersion paste (ii), an electrodeposition coating composition was obtained in the same procedure as in Example 1.

Example 12

Except that as the organic acid (c2), 5.7 parts of methanesulfonic acid (MSA) was used in place of lactic acid, the same procedure as in Example 4 was carried out to prepare a pigment dispersion paste (ii) having a Bi metal concentration as shown in Table 1 (solid content concentration: 47 % by mass).

Using the resulting pigment dispersion paste (ii), an electrodeposition coating composition was obtained in the same procedure as in Example 1.

Example 13

Except that as the polyvalent acid (E), 0.14 parts of citric acid was used in place of tartaric acid, the same procedure as in Example 4 was carried out to prepare a pigment dispersion paste (ii) having a Bi metal concentration as shown in Table 1 (solid content concentration: 47 % by mass) .

Using the resulting pigment dispersion paste (ii), an electrodeposition coating composition was obtained in the same procedure as in Example 1.

Example 14

Except that as the polyvalent acid (E), 0.14 parts of phosphoric acid was used in place of tartaric acid, the same procedure as in Example 4 was carried out to prepare a pigment dispersion paste (ii) having a Bi metal concentration as shown in Table 1 (solid content concentration: 47 % by mass) .

Using the resulting pigment dispersion paste (ii), an electrodeposition coating composition was obtained in the same procedure as in Example 1.

Comparative Example 1

Except that tartaric acid being the polyvalent acid (E) was not added, the same procedure as in Example 1 was carried out to prepare a pigment dispersion paste having a Bi metal concentration as shown in Table 2 (solid content concentration: 47 % by mass).

Using the resulting pigment dispersion paste, an electrodeposition coating composition was obtained in the same procedure as in Example 1.

Comparative Example 2

Production of pigment dispersion paste

5.3 parts of a 50% lactic acid aqueous solution and 6.9 parts of bismuth oxide were mixed with ion-exchanged water with stirring in such a manner that the solid content concentration of a dispersion paste was 47% by mass. To this was added 60 parts of the amine-modified epoxy resin (d1) being the pigment dispersion resin (D), which was obtained in Production Example 1, and the mixture was stirred at 1000 rpm for 1 hour at room temperature.

Thereafter, 3 parts (in terms of a resin solid content) of the emulsion (1) of the amine-modified epoxy resin (d2), which was obtained in Production Example 5-1, was added, next, 1 part of carbon, 40 parts of titanium oxide and 59 parts of Satintone (calcined kaolin) (these being a pigment) were further added, and the mixture was stirred at 2000 rpm for 1 hour at 40°C. Thereafter, 0.14 part of tartaric acid was added, and the mixture was stirred at 2000 rpm for 1 hour at 40°C to obtain a pigment dispersion paste having a Bi metal concentration as shown in Table 2 (solid content concentration: 47 % by mass).

Production of electrodeposition coating composition

Using the resulting pigment dispersion paste, an electrodeposition coating composition was obtained in the same procedure as in Example 1.

Comparative Example 3

Production of pigment dispersion paste

5.3 parts of a 50% lactic acid aqueous solution, 6.9 parts of bismuth oxide, 60 parts of the amine-modified epoxy resin (d1) being the pigment dispersion resin (D), which was obtained in Production Example 1, and 3 parts (in terms of a resin solid content) of the emulsion (1) of the amine-modified epoxy resin (d2), which was obtained in Production Example 5-1, were added to ion-exchanged water without pausing, and the mixture was stirred at 1000 rpm for 1 hour at room temperature.

0.14 parts of tartaric acid was then added and mixed, next, 1 part of carbon, 40 parts of titanium oxide and 59 parts of Satintone (calcined kaolin) (these being a pigment) were further added, and the mixture was stirred at 2000 rpm for 1 hour at 40°C using a sand mill, thereby obtaining a pigment-dispersion paste having a Bi metal concentration as shown in Table 2 (solid content concentration: 47 % by mass).

Production of electrodeposition coating composition

Using the resulting pigment dispersion paste, an electrodeposition coating composition was obtained in the same procedure as in Example 1.

Using the electrodeposition coating compositions obtained by the preparation methods of the examples and comparative examples, the following evaluations were performed.

Preparation of electrodeposition coated sheet having cured electrodeposition coating film

A cold-rolled steel sheet (JIS G 3141, SPCC-SD) was immersed in SURFCLEANER EC 90 (Nippon Paint Co., Ltd.) at 50°C for 2 minutes to perform a degreasing treatment. Next, the steel sheet was immersed in SURFFINE GL 1 (manufactured by Nippon Paint Co., Ltd.) at room temperature for 30 seconds, and immersed in SURFDYNE 6350 (manufactured by Nippon Paint Co., Ltd.) at 35°C for 2 minutes. The steel sheet was rinsed with deionized water. On the other hand, to the electrodeposition coating composition obtained in each of examples and comparative examples, a necessary amount of 2-ethylhexyl glycol was added so that the electrodeposition coating film had a thickness of 15 $\mu$m after curing. Thereafter, the steel sheet was fully embedded in the electrodeposition coating composition, and application of a voltage was then immediately started. The voltage was applied under such a condition that the voltage was raised for 30 seconds to 180 V, and the steel sheet was held for 150 seconds. Thus, an uncured electrodeposition coating film was deposited on the object to be coated (cold-rolled steel sheet). The resulting uncured electrodeposition coating film was heated and cured at 160°C for 15 minutes to obtain an electrodeposition coated sheet having a cured electrodeposition coating film.

Appearance of coating film (appearance of horizontal surface coating)

The electrodeposition coating composition obtained in each of examples and comparative examples was stirred at 1000 rpm, stirring was then stopped, the steel sheet was fully embedded horizontally, held for 3 minutes, and application of a voltage was started. The voltage was applied under such a condition that the voltage was raised for 30 seconds to 180 V, and the steel sheet was held for 150 seconds. Thus, an uncured electrodeposition coating film was deposited on the object to be coated (cold-rolled steel sheet). The resulting uncured electrodeposition coating film was heated and cured at 160°C for 15 minutes to obtain an electrodeposition coated sheet having an electrodeposition coating film. For the electrodeposition coated sheet, presence/absence of defects in the coating film appearance of the upper and lower surfaces was visually evaluated. Evaluation criteria were as follows.

Evaluation criteria

⊙: Both the upper and lower surfaces have a uniform coating film appearance, and have no unevenness.
○: The coating films of the upper and lower surfaces have a part visually recognized as having slight unevenness, but have a substantially uniform coating film appearance as a whole (there is no problem in practical use).
△: The coating films of the upper and lower surfaces have a part visually recognized as having unevenness, and have an uneven coating film appearance as a whole (there is a problem in practical use).
×: The coating film on the horizontal lower surface side is visually recognized as having marked unevenness (there is a problem in practical use).

Storage stability of pigment dispersion paste (ii)

The pigment dispersion paste (ii) used in the preparation of the electrodeposition coating composition in each of examples and comparative examples was stored at 40°C for 1 month, and the state of the pigment dispersion paste (ii) after storage was visually evaluated. Evaluation criteria were as follows.

Evaluation criteria

⊙: The state is not changed as compared to that before storage at 40°C.
○: Either separation or sedimentation is not observed, and little thickening occurs.
△: Soft sedimentation is observed, but the pigment dispersion paste is restored to a uniform state when stirred, and therefore there is no significant problem in use.
×: Hard sedimentation occurs, and the pigment dispersion paste is not restored to a uniform state even when stirred.

Storage stability of electrodeposition coating composition

The electrodeposition coating composition obtained in each of examples and comparative examples was stored at 40°C for 1 month, and the state of the coating composition after storage was evaluated in terms of the filtration property of the coating composition. Evaluation criteria were as follows.

Evaluation criteria

○: The coating composition easily passes through a 508-mesh filter (N-NO. 508 S manufactured by NBC Meshtec Inc., opening: 20 μm).
△: It takes a little time to pass through a 508-mesh filter, but there is no problem in production operation.
×: The coating composition can not pass through a 508-mesh filter, and there is a problem in production operation.

Dispersibility

In preparation of the pigment dispersion paste (ii) in each of examples and comparative examples, stirring was performed at 2000 rpm for 1 hour at 40°C using a sand mill during mixing of the pigment dispersion paste (ii), and the grain size of the paste was then visually observed using a grain gauge. Evaluation criteria were as follows.

Evaluation criteria

○: The grain size is less than 5 $\mu$m.
○△: The grain size is 5 $\mu$m or more and less than 10 $\mu$m.
△: The grain size is 10 $\mu$m or more and less than 15 $\mu$m.
×: The grain size is 15 $\mu$m or more.

Curability

The cured electrodeposition coating film obtained by performing coating in accordance with the above-mentioned evaluation method was immersed in acetone, and heated and refluxed under at 56°C for 4 hours. The cured electrodeposition coating film after the reflux was dried, and the coating film residual ratio was determined from the coating film mass before and after immersion in acetone by the following formula, and curability was evaluated. Evaluation criteria were as follows.

$$\text{Coating film residual ratio} = Y/X$$

X = coating film mass before immersion in acetone; and
Y = coating mass after immersion in acetone.

Evaluation criteria

○: The coating film residual ratio is 92.5% or more.
○△: The coating film residual ratio is 90% or more and less than 92.5%.
△: The coating film residual ratio is 85% or more and less than 90% (there is no problem in practical use).
×: The coating film residual ratio is less than 85% (there is a problem in practical use).

Measurement of diatomaceous earth filtration permeability

A filter paper (434) (ADVANTEC Co., LTD.) was set in a Buchner funnel (inner diameter: 110 mm), and suction filtration was performed using 14.2 g of diatomaceous earth (Radiolite # 700 from Showa Chemical Industry Co., Ltd.), thereby producing a diatomaceous earth cake on the filter paper.

A mixture of the bismuth mixture liquid (C), the pigment dispersion resin (D) and the polyvalent acid (E) was filtered through the diatomaceous earth cake prepared as described above. Here, the amounts of a bismuth element before and after filtration were measured with a fluorescent X-ray, and the permeability was calculated. The permeability indicates a change in content of the bismuth component before diatomaceous earth filtration and after diatomaceous earth filtration. The permeability was calculated by the following formula:

$$\text{[content of bismuth component after diatomaceous earth filtration]}/\text{[content of bismuth component before diatomaceous earth filtration]} \times 100 \,(\%).$$

[Table 1]

| | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| Pigment dispersion paste | Metal concentration (ppm) in pigment dispersion paste | Bismuth oxide | 22415 | 22415 | 22415 | 21910 | 22076 | 18213 | 18213 | | 19046 | 14355 | 21910 | 21910 | 21910 | 21910 |
| | | Bismuth hydroxide | | | | | | | | 21910 | | | | | | |
| | Organic acid (c2) | Lactic acid (molar ratio to bismuth) | 1 | 1 | 1 | 1 | 1 | 1 | 1 | 1 | 1 | 1 | | | 1 | 1 |
| | | DMPA (molar ratio to bismuth) | | | | | | | | | | | | 1 | | |
| | | MSA (molar ratio to bismuth) | | | | | | | | | | | | | 1 | |
| | Pigment dispersion resin (D) | Amine-modified epoxy resin (d1) | O | O | O | O | O | O | O | O | O | O | O | O | O | O |
| | | Emulsion (1) of amine-modified epoxy resin (d2) | | | | O | O | O | O | O | | | O | O | O | O |
| | | Emulsion (2) of amine-modified epoxy resin (d2) | | | | | | | | | O | O | | | | |
| | Polyvalent acid (E) | Tartaric acid | O | O | O | O | O | O | O | O | O | O | O | O | | |
| | | Citric acid | | | | | | | | | | | | | O | |
| | | Phosphoric acid | | | | | | | | | | | | | | O |
| | Pigment (F) Mass concentration (%) in pigment dispersion paste | | 36 | 36 | 36 | 35 | 36 | 29 | 29 | 35 | 31 | 23 | 35 | 35 | 35 | 35 |
| Solid content mass ratio | Amount of bismuth (parts by mass) (amount based on 100 parts by mass of pigment dispersion resin (D(d1 + d2))) | | 20.67 | 20.67 | 20.67 | 18.79 | 19.38 | 10.33 | 10.33 | 18.79 | 11.7 | 6.02 | 18.79 | 18.79 | 18.79 | 18.79 |
| | Pigment (F)/amine-modified epoxy resin (d1) | | 1/0.3 | 1/0.3 | 1/0.3 | 1/0.3 | 1/0.3 | 1/0.3 | 1/0.3 | 1/0.3 | 1/0.5 | 1/1 | 1/0.3 | 1/0.3 | 1/0.3 | 1/0.3 |
| | Pigment (F)/amine-modified epoxy resin emulsion (d2) | | 1/0 | 1/0 | 1/0 | 1/0.03 | 1/0.02 | 1/0.3 | 1/0.3 | 1/0.03 | 1/0.03 | 1/0.03 | 1/0.03 | 1/0.03 | 1/0.03 | 1/0.03 |
| | Amount of polyvalent acid (E) (parts by mass) (amount based on 100 parts by mass of resin (D(d1 + d2))) | | 0.092 | 0.461 | 2.766 | 0.429 | 1.316 | 0.057 | 1.702 | 0.429 | 0.307 | 0.210 | 0.429 | 0.429 | 0.429 | 0.429 |
| | Solid content of amine-modified epoxy resin emulsion (d2) (amount based on 100 parts by mass of polyvalent acid (E) solid content) | | 0.0 | 0.0 | 0.0 | 21.2 | 4.7 | 881.3 | 29.4 | 21.2 | 18.4 | 13.9 | 21.2 | 21.2 | 21.2 | 21.2 |
| | Pigment (F)/polyvalent acid (E) | | 1/ 0.000276 | 1/ 0.00138 | 1/ 0.00830 | 1/ 0.00141 | 1/ 0.00421 | 1/ 0.000340 | 1/ 0.0102 | 1/ 0.00141 | 1/ 0.00163 | 1/ 0.00216 | 1/ 0.00141 | 1/ 0.00141 | 1/ 0.00141 | 1/ 0.00141 |
| Diatomaceous earth filtration permeability (%) of mixture including bismuth mixture (C), pigment dispersion resin (D) and polyvalent acid (E) | | | 39 | 20 | 8 | 7 | 9 | 16 | 4 | 12 | 10 | 8 | 16 | 17 | 7 | 7 |
| Performance | Coating film appearance | | △ | O | ⊙ | ⊙ | ⊙ | ⊙ | ⊙ | ⊙ | ⊙ | ⊙ | ⊙ | ⊙ | ⊙ | ⊙ |
| | Stability | Pigment dispersion paste | △ | O | O | ⊙ | O | △ | △ | ⊙ | ⊙ | ⊙ | ⊙ | ⊙ | ⊙ | ⊙ |
| | | Electrodeposition coating composition | O | O | O | O | O | O | O | O | O | O | O | O | O | O |
| | Dispersibility | | O | O | O | O | O | O | O | O | O | O | O | O | O | O |
| | Curability | | O | O | O△ | O | O | O△ | △ | O | O△ | O△ | O | O | O | O△ |

[Table 2]

| | | | Comparative Example 1 | Comparative Example 2 | Comparative Example 3 |
|---|---|---|---|---|---|
| Pigment dispersion paste | Metal concentration (ppm) in pigment dispersion paste | Bismuth oxide | 22415 | 21910 | 21910 |
| | | Bismuth hydroxide | | | |
| | Organic acid (c2) | Lactic acid (molar ratio to bismuth) | 1 | 1 | 1 |
| | | DMPA (molar ratio to bismuth) | | | |
| | | MSA (molar ratio to bismuth) | | | |
| | Pigment dispersion resin (D) | Amine-modified epoxy resin (d1) | ○ | ○ | ○ |
| | | Emulsion (1) of amine-modified epoxy resin (d2) | | ○ | ○ |
| | | Emulsion (2) of amine-modified epoxy resin (d2) | | | |
| | Polyvalent acid (E) | Tartaric acid | | ○ | ○ |
| | | Citric acid | | | |
| | | Phosphoric acid | | | |
| | Pigment (F) Mass concentration (%) in pigment dispersion paste | | 36 | 35 | 35 |
| Solid content mass ratio | Amount of bismuth (parts by mass) (amount based on 100 parts by mass of pigment dispersion resin (D(d1 + d2)) | | 20.67 | 18.79 | 18.79 |
| | Pigment (F)/amine-modified epoxy resin (d1) | | 1/0.3 | 1/0.3 | 1/0.3 |
| | Pigment (F)/amine-modified epoxy resin emulsion (d2) | | 1/0 | 1/0.03 | 1/0.03 |
| | Amount of polyvalent acid (E) (parts by mass) (amount based on 100 parts by mass of resin (D(d1 + d2)) | | 0 | 0.429 | 0.429 |
| | Solid content of amine-modified epoxy resin emulsion (d2) (amount based on 100 parts by mass of polyvalent acid (E) solid content) | | – | 21.203 | 21.203 |
| | Pigment (F)/polyvalent acid (E) | | 0 | 1/0.00141 | 1/0.00141 |
| Diatomaceous earth filtration permeability (%) of mixture including bismuth mixture (C), pigment dispersion resin (D) and polyvalent acid (E) | | | 95 | – | – |
| Performance | Coating film appearance | | × | × | × |
| | Stability | Pigment dispersion paste | × | × | × |
| | | Electrodeposition coating composition | ○ | × | △ |
| | Dispersibility | | ○ | ○ | ○ |
| | Curability | | ○ | △ | × |

It was confirmed that both the electrodeposition coating composition and the pigment dispersion paste (ii) obtained in each of examples were excellent in dispersion stability, the electrodeposition coating composition had favorable curability, and the resulting cured electrodeposition coating film had a favorable coating film appearance.

Comparative Example 1 is an example in which a pigment dispersion paste is prepared without using the polyvalent acid (E). In this example, the resulting cured electrodeposition coating film had color unevenness, and was poor in coating film appearance. In addition, the pigment dispersion paste had poor stability.

Each of Comparative Examples 2 and 3 is an example in which a pigment dispersion paste is prepared by a procedure which is different from that of the preparation method of the present invention. In each of these examples, the resulting cured electrodeposition coating film had color unevenness, and was poor in coating film appearance. In addition, In addition, the pigment dispersion paste had poor stability, and poor curability.

Industrial Applicability

According to the preparation method of the present invention, a cationic electrodeposition coating composition excellent in coating material stability, curability, coating film appearance and so on can be more easily prepared. According to the preparation method of the present invention, a cationic electrodeposition coating composition can be easily prepared which is excellent in curability, coating material stability and coating film appearance although the cationic electrodeposition coating composition does not substantially contain an organotin compound.

## Claims

1. A method for preparing a cationic electrodeposition coating composition, wherein the method comprises a step of mixing a resin emulsion (i) and a pigment dispersion paste (ii), wherein

   the resin emulsion (i) comprises an aminated resin (A) and a blocked isocyanate curing agent (B),
   the pigment dispersion paste (ii) comprises a bismuth mixture liquid (C) containing a bismuth compound (c1), an organic acid (c2) and a solvent; a pigment dispersion resin (D); a polyvalent acid (E); and a pigment (F), and wherein
   the pigment dispersion paste (ii) is prepared by:

   mixing the bismuth compound (c1), the organic acid (c2) and the solvent to prepare the bismuth mixture liquid (C);
   mixing the resulting bismuth mixture liquid (C), the pigment dispersion resin (D) and the polyvalent acid (E) to prepare a bismuth dispersion liquid, and
   mixing the resulting bismuth dispersion liquid and the pigment (F) to prepare the pigment dispersion paste (ii), and wherein
   the polyvalent acid (E) is at least one or more selected from the group consisting of tartaric acid, citric acid, phosphoric acid, condensed phosphoric acid, malic acid and polyacrylic acid; and
   the organic acid (c2) is at least one or more selected from the group consisting of lactic acid, dimethylolpropionic acid and methanesulfonic acid.

2. The method for preparing a cationic electrodeposition coating composition according to claim 1, wherein the polyvalent acid (E) is at least one or more selected from the group consisting of a compound having two or more carboxylic acid groups, and a compound having a phosphoric acid group.

3. The method for preparing a cationic electrodeposition coating composition according to any of claims 1 to 2, wherein an amount of the polyvalent acid (E) contained in the pigment dispersion paste (ii) is 0.01 to 10 parts by mass based on 100 parts by mass of a resin solid content of the pigment dispersion resin (D).

4. The method for preparing a cationic electrodeposition coating composition according to any one of claims 1 to 3, wherein the pigment dispersion resin (D) comprises at least one resin selected from the group consisting of an amine-modified epoxy resin (d1) having a hydroxyl value of 20 to 120 mg KOH/g and an amine-modified epoxy resin (d2) having a hydroxyl value of 150 to 650 mg KOH/g.

5. The method for preparing a cationic electrodeposition coating composition according to claim 4, wherein the pigment dispersion resin (D) comprises the amine-modified epoxy resin (d2), and an amount of the amine-modified epoxy resin (d2) is 0.1 to 1000 parts by mass based on 100 parts by mass of a solid content of the polyvalent acid (E).

6. The method for preparing a cationic electrodeposition coating composition according to any one of claims 1 to 5, wherein a diatomaceous earth filtration permeability of bismuth of the bismuth dispersion liquid is 50 % by mass or less.

7. The method for preparing a cationic electrodeposition coating composition according to any one of claims 4 to 6, wherein the amine-modified epoxy resin (d2) is a resin neutralized with at least one acid selected from the group consisting of formic acid, acetic acid and lactic acid.

## Patentansprüche

1. Verfahren zur Herstellung einer Beschichtungszusammensetzung für die kationische Galvanisierung, wobei das Verfahren einen Schritt des Vermischens einer Harzemulsion (i) mit einer Pigmentdispersionspaste (ii) umfasst, wobei:

die Harzemulsion (i) ein aminiertes Harz (A) und ein blockiertes Isocyanat als Härter (B) umfasst,
die Pigmentdispersionspaste (ii) ein flüssiges Bismutgemisch (C), das eine Bismutverbindung (c1), eine organische Säure (c2) und ein Lösungsmittel enthält; ein Pigmentdispersionsharz (D); eine mehrwertige Säure (E) und ein Pigment (F) umfasst, und wobei
die Pigmentdispersionspaste (ii) hergestellt wird, indem:

die Bismutverbindung (c1), die organische Säure (c2) und das Lösungsmittel vermischt werden, um das flüssige Bismutgemisch (C) herzustellen;
das erhaltene flüssige Bismutgemisch (C), das Pigmentdispersionsharz (D) und die mehrwertige Säure (E) vermischt werden, um eine flüssige Bismutdispersion herzustellen, und
die erhaltene flüssige Bismutdispersion und das Pigment (F) vermischt werden, um die Pigmentdispersionspaste (ii) herzustellen, und wobei
die mehrwertige Säure (E) zumindest eine oder mehrere, ausgewählt aus der aus Weinsäure, Citronensäure, Phosphorsäure, Polyphosphorsäure, Äpfelsäure und Polyacrylsäure bestehenden Gruppe ist/sind; und
die organisches Säure (c2) zumindest eine oder mehrere, ausgewählt aus der aus Milchsäure, Dimethylolpropionsäure und Methansulfonsäure bestehenden Gruppe ist/sind.

2. Verfahren zur Herstellung einer Beschichtungszusammensetzung für die kationische Galvanisierung nach Anspruch 1, wobei die mehrwertige Säure (E) zumindest eine oder mehrere, ausgewählt aus der aus einer Verbindung mit zwei oder mehr Carboxylgruppen und einer Verbindung mit einer Phosphorsäuregruppe bestehenden Gruppe ist/sind.

3. Verfahren zur Herstellung einer Beschichtungszusammensetzung für die kationische Galvanisierung nach einem der Ansprüche 1 bis 2, wobei die Menge der mehrwertigen Säure (E), die in der Pigmentdispersionspaste (ii) enthalten ist, 0,01 bis 10 Massenteile, bezogen auf 100 Massenteile des Harzfeststoffgehalts des Pigmentdispersionsharzes (D), beträgt.

4. Verfahren zur Herstellung einer Beschichtungszusammensetzung für die kationische Galvanisierung nach einem der Ansprüche 1 bis 3, wobei das Pigmentdispersionsharz (D) zumindest ein Harz, ausgewählt aus der aus einem aminmodifizierten Epoxidharz (d1) mit einer Hydroxylzahl von 20 bis 120 mg KOH/g und einem aminmodifizierten Epoxidharz (d2) mit einer Hydroxylzahl von 150 bis 650 mg KOH/g bestehenden Gruppe umfasst.

5. Verfahren zur Herstellung einer Beschichtungszusammensetzung für die kationische Galvanisierung nach Anspruch 4, wobei das Pigmentdispersionsharz (D) das aminmodifizierte Epoxidharz (d2) umfasst und die Menge des aminmodifizierten Epoxidharzes (d2) 0,1 bis 1.000 Massenteile, bezogen auf 100 Massenteile des Feststoffgehalts der mehrwertigen Säure (E) beträgt.

6. Verfahren zur Herstellung einer Beschichtungszusammensetzung für die kationische Galvanisierung nach einem der Ansprüche 1 bis 5, wobei die Kieselgurfiltrationsdurchlässigkeit des Bismuts in der flüssigen Bismutdispersion 50 Massen-% oder weniger beträgt.

7. Verfahren zur Herstellung einer Beschichtungszusammensetzung für die kationische Galvanisierung nach einem der Ansprüche 4 bis 6, wobei das aminmodifizierte Epoxidharz (d2) ein Harz ist, das mit zumindest einer Säure, ausgewählt aus der aus Ameisensäure, Essigsäure und Milchsäure bestehenden Gruppe neutralisiert ist.

**Revendications**

1. Procédé de préparation d'une composition de revêtement par électrodéposition cationique, dans lequel le procédé comprend une étape consistant à mélanger une émulsion de résine (i) et une pâte de dispersion pigmentaire (ii), dans lequel

l'émulsion de résine (i) comprend une résine aminée (A) et un agent de durcissement de type isocyanate bloqué (B),
la pâte de dispersion pigmentaire (ii) comprend un liquide de mélange à base de bismuth (C) contenant un composé de bismuth (c1), un acide organique (c2) et un solvant ; une résine de dispersion pigmentaire (D); un acide polyvalent (E) ; et un pigment (F), et dans lequel

la pâte de dispersion pigmentaire (ii) est préparée par les étapes consistant à :

mélanger le composé de bismuth (c1), l'acide organique (c2) et le solvant pour préparer le liquide de mélange de bismuth (C) ;

mélanger le liquide de mélange de bismuth (C) résultant, la résine de dispersion pigmentaire (D) et l'acide polyvalent (E) pour préparer un liquide de dispersion de bismuth, et

mélanger le liquide de dispersion de bismuth résultant et le pigment (F) pour préparer la pâte de dispersion pigmentaire (ii), et dans lequel

l'acide polyvalent (E) est au moins un ou plusieurs choisi (s) dans le groupe comprenant acide tartrique, acide citrique, acide phosphorique, acide phosphorique condensé, acide malique et acide polyacrylique ; et l'acide organique (c2) est au moins un ou plusieurs choisi(s) dans le groupe comprenant acide lactique, acide diméthylolpropionique et acide méthanesulfonique.

2. Procédé de préparation d'une composition de revêtement par électrodéposition cationique selon la revendication 1, dans lequel l'acide polyvalent (E) est au moins un ou plusieurs choisi(s) dans le groupe comprenant un composé présentant deux groupes acide carboxylique ou plus, et un composé présentant un groupe acide phosphorique.

3. Procédé de préparation d'une composition de revêtement par électrodéposition cationique selon l'une quelconque des revendications 1 à 2, dans lequel une quantité de l'acide polyvalent (E) contenu dans la pâte de dispersion pigmentaire (ii) est de 0,01 à 10 parties en masse sur la base de 100 parties en masse d'une teneur en solide de résine de la résine de dispersion pigmentaire (D).

4. Procédé de préparation d'une composition de revêtement par électrodéposition cationique selon l'une quelconque des revendications 1 à 3, dans lequel la résine de dispersion pigmentaire (D) comprend au moins une résine choisie dans le groupe comprenant une résine époxy modifiée par une amine (d1) présentant un indice d'hydroxyle de 20 à 120 mg KOH/g et une résine époxy modifiée par une amine (d2) présentant un indice d'hydroxyle de 150 à 650 mg KOH/g.

5. Procédé de préparation d'une composition de revêtement par électrodéposition cationique selon la revendication 4, dans lequel la résine de dispersion pigmentaire (D) comprend la résine époxy modifiée par une amine (d2), et une quantité de la résine époxy modifiée par une amine (d2) est de 0,1 à 1 000 parties en masse sur la base de 100 parties en masse d'une teneur en solide de l'acide polyvalent (E).

6. Procédé de préparation d'une composition de revêtement par électrodéposition cationique selon l'une quelconque des revendications 1 à 5, dans lequel une perméabilité de filtration de terre de diatomées du bismuth du liquide de dispersion de bismuth est de 50 % en masse ou moins.

7. Procédé de préparation d'une composition de revêtement par électrodéposition cationique selon l'une quelconque des revendications 4 à 6, dans lequel la résine époxy modifiée par une amine (d2) est une résine neutralisée avec au moins un acide choisi dans le groupe comprenant acide formique, acide acétique et acide lactique.

**REFERENCES CITED IN THE DESCRIPTION**

**Patent documents cited in the description**

- JP 3293633 B
- JP 3874386 B
- EP 3266842 A
- US 6333367 B1
- JP 2013056961 B
- JP H51993306327 A